# EUROPÄISCHE PATENTANMELDUNG

(11) **EP 1 473 505 A1**
(43) Veröffentlichungstag der Anmeldung: **03.11.2004**
(21) Anmeldenummer: 04010076.0
(22) Anmeldetag: 28.04.2004
(51) Int. Cl.: F16L 45/00

(54) **Auslaufschutz**

(30) Priorität: 28.04.2003 DE 10319080
(71) Anmelder: Lazi, Hermann, 97265 Hettstadt (DE)
(72) Erfinder: Lazi, Hermann, 97265 Hettstadt (DE)
(74) Vertreter: von den Steinen, Axel

(57) **Zusammenfassung**

Die Erfindung betrifft einen Auslaufschutz zur Anordnung an einer mit einem Verschlussmittel verschließbaren Öffnung einer Abwasserleitung (12), wobei als Auslaufschutz vor der Öffnung ein Dichtelement (03, 24) vorgesehen ist, das an der Abwasserleitung (12) befestigt ist und den Querschnitt der Öffnung zumindest teilweise abdeckt, wobei am Dichtelement (03, 24) zumindest ein Durchbruch vorhanden ist oder hergestellt werden kann, durch den ein Reinigungswerkzeug (26) in die Abwasserleitung (12) eingeführt werden kann.

## Beschreibung

Die Erfindung betrifft einen Auslaufschutz zur Anordnung an einer mit einem Verschlussmittel verschließbaren Öffnung einer Abwasserleitung.

Abwasserleitungen weisen Öffnungen auf, die in der Regel mit einem Deckel verschlossen sind und dazu dienen, bei Verstopfungen oder Reinigungsarbeiten an der Abwasserleitung an die betroffenen Teilbereiche der Leitung zu gelangen. Bei Verstopfungen oder Ähnlichem kann der Deckel, mit dem die Öffnung verschlossen ist, von einem Arbeiter entfernt werden, so dass in die Öffnung ein Reinigungswerkzeug eingeführt werden kann. Befindet sich im Bereich über der Verstopfung eine entsprechend große Wassersäule, so ist es dem Arbeiter nur sehr schwer möglich, sich nach Beseitigung der Verstopfung vor auslaufendem Abwasser zu schützen. Zugleich kommt es im Bereich der Öffnung zu sehr großen Verschmutzungen. Dies ist vor allem problematisch, falls sich die Öffnung in Wohnbereichen oder öffentlichen Anlagen mit starkem Personenverkehr befindet.

Aufgabe der vorliegenden Erfindung ist es deshalb, einen Auslaufschutz zur Anordnung an einer mit einem Verschlussmittel verschließbaren Öffnung einer Abwasserleitung vorzuschlagen, mit dem die oben genannten Nachteile vermieden werden können.

Diese Aufgabe wird durch einen Auslaufschutz nach der Lehre des Patentanspruchs 1 gelöst.

Vorteilhafte Ausführungsformen der Erfindung sind Gegenstand der Unteransprüche.

Ein Vorteil der Erfindung besteht darin, dass als Auslaufschutz vor der Öffnung ein Dichtelement vorgesehen ist, das an der Abwasserleitung befestigt ist und den Querschnitt der Öffnung abdeckt, wobei am Dichtelement zumindest ein Durchbruch vorhanden ist oder hergestellt werden kann, durch den ein Reinigungswerkzeug in die Abwasserleitung eingeführt werden kann. Dieser Auslaufschutz bewirkt, dass, nachdem das Verschlussmittel, z.B. ein Deckel, von der Öffnung entfernt wurde, das Abwasser von dem Auslaufschutz zurückgehalten wird und der Arbeiter nach Entfernen des Deckels nicht sofort mit heraustretendem Abwasser verschmutzt und die unmittelbare Umgebung der Öffnung nicht verunreinigt wird.

Als Verschlussmittel kann ein Deckel verwendet werden, der als Befestigungsmittel ein Schraubgewinde aufweist. Dadurch kann ein einfaches Entfernen bzw. Wiederanbringen des Deckels gewährleistet werden.

Das Dichtelement selbst kann an einem Trägerelement befestigt werden, wobei das Trägerelement wiederum an der Abwasserleitung befestigbar ist.

Dazu weist das Trägerelement vorteilhafterweise zwei Schraubgewinde auf, wobei am ersten Schraubgewinde das Verschlussmittel befestigbar ist und wobei das Trägerelement mit dem zweiten Schraubgewinde an einem an der Abwasserleitung vorgesehenen, funktionskomplementär ausgebildeten Schraubgewinde, an dem wahlweise auch das Verschlussmittel befestigbar ist, befestigt werden kann. Es sind also keine weiteren Vorbereitungsarbeiten zur Montage des Trägerelements notwendig, da das gegebene Gewinde des Verschlussmittels bzw. des Deckels genutzt werden kann. Dies ermöglicht eine sehr einfache und kostengünstige Anbringung des Auslaufschutzes.

Idealerweise wird das Trägerelement aus dem gleichen Werkstoff wie die Abwasserleitung und/oder das Verschlusselement hergestellt. So kann es vorkommen, dass bei bestimmten Brandschutzanforderungen die Abwasserleitungen aus Guss oder einem gussähnlichen Material hergestellt sind und es sich somit empfiehlt, auch das Trägerelement bzw. das Verschlusselement aus dem gleichen Material herzustellen.

Das Dichtelement wird so ausgeführt, dass es zumindest geringfügig elastisch verformbar ist. Dazu ist das Dichtelement vorteilhafterweise aus Elastomer hergestellt.

In einer weiteren Ausführungsform ist es denkbar, dass zwischen der Öffnung und dem Verschlussmittel mehrere, im Wesentlichen baugleiche Dichtelemente vorgesehen sind, die gemeinsam ein Dichtungspaket bilden. Dies ist besonders vorteilhaft, da das Dichtungspaket auch bei hohem Druck bzw. bei einer großen anstehenden Wassersäule in der Abwasserleitung die Öffnung noch sehr gut abdichtet. Außerdem wird das Dichtelement, welches vom Reinigungswerkzeug durchstoßen wird, bereits vom nächsten dahinterliegenden Dichtelement abgedichtet, so dass keine oder zumindest sehr geringe Mengen an Abwasser aus dem Dichtelement austreten können.

Werden mehrere Dichtelemente zu einem Dichtungspaket zusammengesetzt, so wird das Dichtungspaket durch Befestigungsmittel zusammengehalten. Dadurch kann das Dichtungspaket als eine Einheit in die Öffnung bzw. in das Trägerelement eingeführt bzw. angebracht werden.

Als Befestigungsmittel können dabei Spannschrauben verwendet werden, wobei die Dichtelemente Ausnehmungen aufweisen, in denen die Dichtelemente bei Bildung des Dichtungspakets von den Spannschrauben durchgriffen werden. Es sind also keine weiteren Arbeiten an dem Dichtelement vorzunehmen.

Das Dichtelement ist insbesondere als kreisförmige Dichtscheibe ausgebildet, wobei es natürlich auch denkbar ist, das Dichtelement in einer anderen Form bzw. aus mehreren Teilen herzustellen und so der Öffnung an der Abwasserleitung anzupassen.

Um die Herstellung des Durchbruchs im Dichtelement durch Eindringen des Reinigungswerkzeuges in die Dichtscheibe zu ermöglichen, kann die Dichtscheibe eine Sollbruchstelle aufweisen.

Diese Sollbruchstelle kann aus zumindest einem vorgefertigten Schlitz, der als Durchbruch dient, bestehen.

Es ist insbesondere denkbar, dass sich an der Dichtscheibe mehrere Schlitze kreuzen. Durch die vorgefertigten Schlitze, die sich in der Dichtscheibe befinden, wird ein besonders einfaches Einführen des Reinigungswerkzeuges in die Dichtscheibe erreicht. Vorteilhafterweise werden die Schlitze dabei so in der Dichtscheibe angeordnet, dass sie den Außenrand der Dichtscheibe nicht durchbrechen.

Vorzugsweise werden die Dichtelemente derart im Dichtungspaket angeordnet, dass die Durchbrüche an zwei benachbarten Dichtelementen zumindest abschnittsweise zueinander versetzt sind. Damit wird erreicht, dass beim Durchstoßen des ersten Dichtelements das dahinterliegende Dichtelement nicht an der gleichen Stelle durchstoßen wird und es somit zu einer noch zuverlässigeren Abdichtung der Öffnung kommt.

Weiterhin ist am Außenrand der Dichtscheibe zumindest eine Nut vorgesehen. Ein am Trägerelement vorgesehener Befestigungsvorsprung kann derart in diese Nut eingeführt werden, dass die Dichtscheibe durch Verdrehen der Nut relativ zum Befestigungsvorsprung formschlüssig am Trägerelement festgelegt werden kann. Dadurch wird ein sehr sicherer Sitz der Dichtscheibe bzw. des Dichtungspakets im Trägerelement erreicht. Zudem sind keine weiteren Befestigungsmittel oder Sicherungsmittel für den Sitz der Dichtscheibe bzw. des Dichtungspakets notwendig.

In einer weiteren Ausführungsform kann zwischen der Öffnung und dem Dichtelement eine zusätzliche Dichtungsmembran mit einer Sollbruchstelle vorgesehen sein, die das Dichtelement wasserdicht vom wasserführenden Innenbereich der Abwasserleitung trennt.

Je nach Ausführungsform kann die zusätzliche Dichtmembran auch als Verschlussmittel dienen. Somit könnte auf einen zusätzlichen Deckel am Trägerelement verzichtet werden.

In einer weiteren Ausführungsform ist es denkbar, dass das Reinigungswerkzeug teilweise am Dichtelement vormontiert ist und den Durchbruch permanent durchgreift. Der Arbeiter muss bei Reinigungsarbeiten also lediglich mit seiner Reinigungsspirale an das schon im Dichtelement vormontierte Reinigungswerkzeug anschließen, so dass sofort mit der Reinigung begonnen werden kann, ohne aufwendige vorbereitende Maßnahmen zu treffen. Dazu kann an dem Reinigungswerkzeug zumindest ein Kupplungsstück für eine einfache und schnelle Montage der Reinigungsspirale vorgesehen sein.

Das vormontierte Reinigungswerkzeug kann so angeordnet sein, dass es durch die zusätzliche Dichtmembran wassergeschützt ist. Dies hat den Zweck, dass sich das Reinigungswerkzeug nicht ständig im Abwasser befindet und somit eine unnötige Korrosionsbildung vermieden wird.

Das Reinigungswerkzeug selbst kann als Spitze einer rotatorisch antreibbaren Reinigungsspirale ausgebildet sein. Natürlich sind hier auch andere Varianten oder Ausführungsformen denkbar.

Bei der Abwasserleitung kann es sich um eine in der Art eines Fallrohres ausgebildete Abwasserleitung oder um eine in der Art eines Revisionsschachtes ausgebildete Abwasserleitung handeln.

In einer weiteren Ausführungsform ist es denkbar, dass am Verschlusselement und/oder am Trägerelement eine Füllstandsanzeige vorgesehen ist, mit der der Wasserstand in der Abwasserleitung angezeigt werden kann.

Dabei ist es denkbar, die Füllstandsanzeige in der Art eines Schwimmers auszubilden.

Idealerweise kann das Dichtungselement oder das Dichtungspaket als vormontierte Einheit an jeder beliebigen Öffnung einer Abwasserleitung bzw. eines Fallrohres oder eines Revisionsschachtes zum Einsatz kommen, so dass keinerlei vorherige Arbeiten oder vorbereitende Maßnahmen an den Abwasserleitungen erforderlich sind. Somit kann das Dichtungselement oder das Dichtungspaket als separate Baugruppe betrachtet werden, die es ermöglicht, einen kostengünstigen Auslaufschutz für Öffnungen der in Rede stehenden Art zu gewährleisten.

Verschiedene Ausführungsformen der Erfindung sind in den Zeichnungen dargestellt und werden nachfolgend beispielhaft erläutert.

Es zeigen:
- **Fig. 1**: ein in einem Trägerelement angeordnetes Dichtungspaket im Querschnitt;
- **Fig. 2**: ein Dichtungselement in Ansicht von oben;
- **Fig. 3**: das Trägerelement gemäß **Fig.1** mit einer zusätzlich am Trägerelement angeordneten Dichtungsmembran im Querschnitt;
- Fig. 4: ein Dichtelement mit vormontiertem Reinigungswerkzeug im Querschnitt.

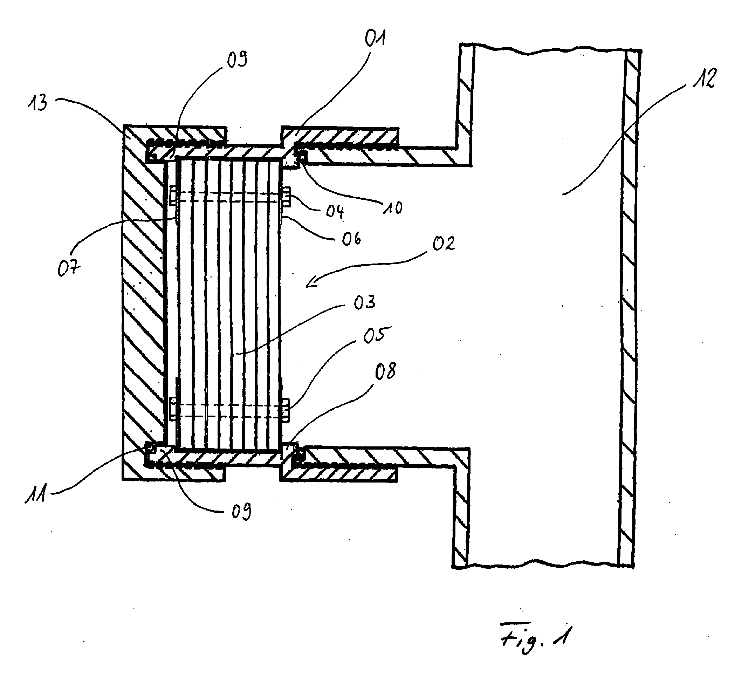

**Fig. 1** zeigt ein in einem Trägerelement 01 angeordnetes Dichtungspaket 02. Das Dichtungspaket 02 wird dabei aus mehreren einzelnen Dichtelementen 03 gebildet, wobei die einzelnen Dichtelemente 03 mittels dreier Spannschrauben 04 und 05 fixiert werden, von denen eine in **Fig.1** nicht dargestellt ist. Um einen besseren Sitz der Dichtelemente zueinander zu gewährleisten, sind unter den Befestigungsschrauben 04 und 05 kreisringförmige Bleche 06 und 07 angeordnet, die einen größeren Druck auf die einzelnen Dichtelemente 03 bewirken.

Das Trägerelement 01 weist einen kreisförmigen Vorsprung 08 und zwei Befestigungsvorsprünge 09 auf, zwischen denen das Dichtungspaket 02 festgelegt wird. Weiterhin wird das Trägerelement 01 mit zwei zusätzlichen Dichtringen 10 und 11 gegen heraustretendes Abwasser abgedichtet. Der erste Dichtring 10 ist hierbei zwischen dem Trägerelement 01 und der Öffnung der Abwasserleitung 12 angeordnet. Der zweite Dichtring 11 ist zwischen dem Trägerelement 01 und dem mittels eines Schraubgewindes auf dem Trägerelement 01 angeordneten Deckel 13 angeordnet. Das Schraubgewinde am Trägerelement 01, an dem der Deckel 13 befestigt ist, entspricht exakt dem Schraubgewinde, welches sich an der Öffnung der Abwasserleitung 12 befindet. Somit kann das Trägerelement 01 einfach zwischen der bestehenden Abwasserleitung 12 und dem vorhandenen Deckel 13 angeordnet werden. Es sind also keine weiteren Arbeiten an der Öffnung bzw. der Abwasserleitung 12 oder dem Deckel 13 vorzunehmen.

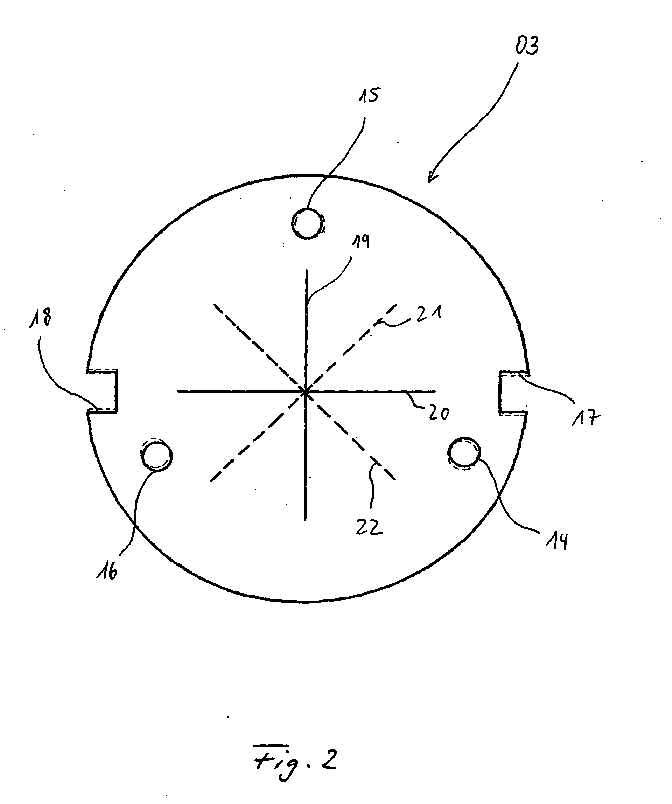

**Fig. 2** zeigt ein als Einzelteil dargestelltes Dichtelement 03. Das Dichtelement 03 ist mit drei Bohrungen 14, 15 und 16 versehen, in denen die Spannschrauben 04 und 05 zur Anlage kommen können. Des Weiteren befinden sich am Dichtelement 03 zwei als Nut 17 und 18 ausgebildete Ausnehmungen, die dazu dienen, dass die Dichtscheibe 03 an den Befestigungsvorsprüngen 09 vorbei in das Trägerelement 01 eingeschoben werden kann. Durch Verdrehen der Nut 17 und 18 relativ zu den Befestigungsvorsprüngen 09 wird das Dichtungspaket 02 formschlüssig am Trägerelement 01 festgelegt. Weiterhin ist das Dichtelement 03 mit zwei vorgefertigten Schlitzen 19 und 20 versehen, die bei dieser Ausführungsform eine Kreuzanordnung ergeben, wobei die Schlitze 19 und 20 dazu dienen, ein einfacheres Eindringen des Reinigungswerkzeuges in das Dichtelement zu ermöglichen. Die Strichlinien 21 und 22 deuten die Schlitze eines zum Dichtelement 03 im Dichtungspaket 02 benachbart angeordneten weiteren Dichtelements an. Diese Schlitze sind versetzt zu den Schlitzen 19 und 20 des Dichtelements 03 angeordnet.

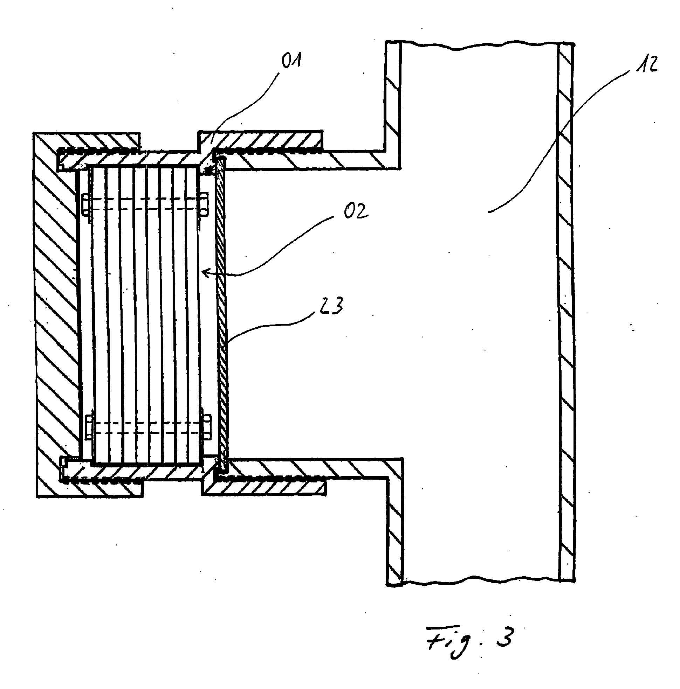

**Fig. 3** zeigt den Auslaufschutz gemäß **Fig. 1** in einer weiteren Ausführungsform. Hierbei ist zwischen dem Trägerelement 01 und der Öffnung der Abwasserleitung 12 eine Dichtungsmembran 23 vorgesehen, die es ermöglicht, auf weitere Dichtelemente, wie die Dichtringe 10 und 11, am Trägerelement 01 zu verzichten. Rein theoretisch könnte hierbei auch auf den Deckel 13 verzichtet werden, da durch die Dichtungsmembran 23 eine sichere Abdichtung des Trägerelements 01 erfolgt. Der Deckel 13 müsste hierbei erst nach Einführung des Reinigungswerkzeuges in das Dichtungspaket 02 bzw. bei Durchstoßen der Dichtungsmembran 23 angelegt werden.

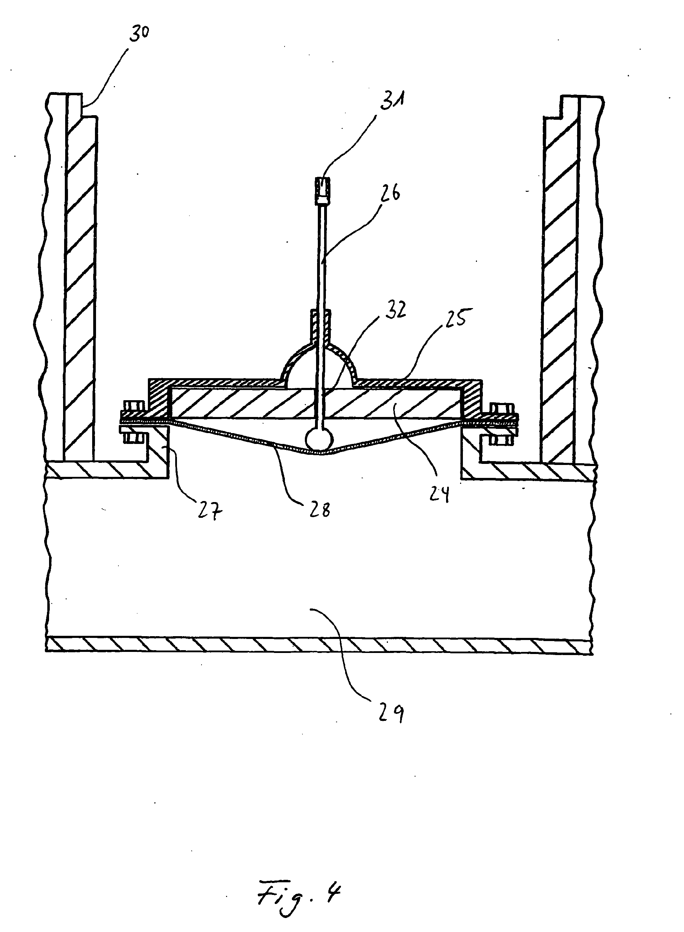

**Fig. 4** zeigt eine weitere Ausführungsform eines erfindungsgemäßen Auslaufschutzes. Dabei befindet sich im Dichtelement 24 ein den Deckel 25 durchgreifendes vormontiertes Reinigungswerkzeug 26, welches durch eine zwischen dem Deckel 25 und dem Flansch 27 angeordnete Dichtungsmembran 28 geschützt wird. Der hier abgebildete Revisionsschacht 29 ist so im Erdreich angeordnet, dass die Öffnung des Revisionsschachtes 29 bzw. das Reinigungswerkzeug 26 mit einem Verschlussdeckel, der in den Ausnehmungen der Ständerkonstruktion 30 zur Anlage kommen kann, geschützt wird. Nachdem der Arbeiter den Verschlussdeckel entfernt hat, kann er z.B. eine Reinigungsspirale an das vormontierte Reinigungswerkzeug 26, welches mit einem Kupplungsstück 31 versehen ist, anschließen. Die Dichtungsmembran 28 kann, nachdem die Reinigungsspirale an dem Reinigungswerkzeug 26 angeschlossen wurde, mit einem leichten Druck durchstoßen werden, so dass die Reinigungsarbeiten ohne weitere Vorbereitungen sofort begonnen werden können. Das Dichtelement 24, welches im Deckel 25 befestigt ist und lediglich mit einer Ausnehmung 32 für das Reinigungswerkzeug 26 versehen ist, sorgt dafür, dass kein Abwasser nach Durchstoßen der Dichtungsmembran 28 aus dem Deckel 25 austreten kann. Somit können Verunreinigungen bzw. Verschmutzungen an der Öffnung oder am Arbeiter bzw. an der weiteren Umgebung der Öffnung vermieden werden. Durch die mittige Auswölbung am Deckel 25 und die Verwendung eines elastisch verformbaren Materials kann das Reinigungswerkzeug 26 angewinkelt und in der gewünschten Richtung in den Revisionsschacht 29 eingeführt werden.

Die in **Fig. 4** dargestellte Ausführungsform kann auch dahingehend modifiziert werden, dass statt dem Dichtelement 24 ein oder mehrere Dichtringe hintereinander im Deckel 25 befestigt sind. Diese Dichtringe lassen eine Öffnung, durch die ein Reinigungswerkzeug, beispielsweise eine Reinigungsspirale, durchgesteckt werden kann. Dadurch wird eine einfache Montage und Demontage des Reinigungswerkzeuges im Einsatzfall möglich. Während des Gebrauchs des Reinigungswerkzeuges 26 liegen die Dichtringe dann abdichtend am Umfang des Reinigungswerkzeuges an und verhindern das Auslaufen von Flüssigkeit.

## Patentansprüche

1. Auslaufschutz zur Anordnung an einer mit einem Verschlussmittel verschließbaren Öffnung einer Abwasserleitung (12),
**dadurch gekennzeichnet,**
**dass** als Auslaufschutz vor der Öffnung ein Dichtelement (03, 24) vorgesehen ist, das an der Abwasserleitung (12) befestigt ist und den Querschnitt der Öffnung zumindest teilweise abdeckt, wobei am Dichtelement (03, 24) zumindest ein Durchbruch vorhanden ist oder hergestellt werden kann, durch den ein Reinigungswerkzeug (26) in die Abwasserleitung (12) eingeführt werden kann.

2. Auslaufschutz nach Anspruch 1,
**dadurch gekennzeichnet,**
**dass** als Verschlussmittel ein Deckel (13, 25) verwendet wird, der als Befestigungsmittel ein Schraubgewinde aufweist.

3. Auslaufschutz nach einem der Ansprüche 1 oder 2,
**dadurch gekennzeichnet,**
**dass** das Dichtelement (03, 24) an einem Trägerelement (01) befestigt ist, wobei das Trägerelement (01) an der Abwasserleitung (12) befestigt werden kann.

4. Auslaufschutz nach einem der Ansprüche 1 bis 3,
**dadurch gekennzeichnet,**
**dass** am Trägerelement (01) zwei Schraubgewinde vorgesehen sind, wobei am ersten Schraubgewinde das Verschlussmittel befestigbar ist, und wobei das Trägerelement (01) mit dem zweiten Schraubgewinde an einem an der Abwasserleitung (12) vorgesehenen, funktionskomplementär ausgebildeten Schraubgewinde, an dem wahlweise auch das Verschlussmittel befestigbar ist, befestigt werden kann.

5. Auslaufschutz nach einem der Ansprüche 1 bis 4,
**dadurch gekennzeichnet,**
**dass** das Trägerelement (01) aus dem gleichen Werkstoff wie die Abwasserleitung (12) und/oder das Verschlusselement hergestellt ist.

6. Auslaufschutz nach einem der Ansprüche 1 bis 5,
**dadurch gekennzeichnet,**
**dass** das Dichtelement (03, 24) zumindest geringfügig elastisch verformbar ist.

7. Auslaufschutz nach einem der Ansprüche 1 bis 6,
**dadurch gekennzeichnet,**
**dass** das Dichtelement (03, 24) aus Elastomer hergestellt ist.

8. Auslaufschutz nach einem der Ansprüche 1 bis 7,
**dadurch gekennzeichnet,**
**dass** zwischen der Öffnung und dem Verschlussmittel mehrere, im Wesentlichen baugleiche Dichtelemente (03, 24) vorgesehen sind, die gemeinsam ein Dichtungspaket (02) bilden.

9. Auslaufschutz nach Anspruch 8,
**dadurch gekennzeichnet,**
**dass** das Dichtungspaket (02) durch Befestigungsmittel zusammengehalten wird.

10. Auslaufschutz nach einem der Ansprüche 8 oder 9,
**dadurch gekennzeichnet,**
**dass** als Befestigungsmittel Spannschrauben (04, 05) verwendet werden, wobei die Dichtelemente (03, 24) Ausnehmungen aufweisen, in denen die Dichtelemente (03, 24) bei Bildung des Dichtungspakets (02) von den Spannschrauben (04, 05) durchgriffen werden.

11. Auslaufschutz nach einem der Ansprüche 1 bis 10,
**dadurch gekennzeichnet,**
**dass** das Dichtelement (03, 24) als, insbesondere kreisförmige, Dichtscheibe ausgebildet ist.

12. Auslaufschutz nach Anspruch 11,
**dadurch gekennzeichnet,**
**dass** die Dichtscheibe eine Sollbruchstelle zur Bildung eines Durchbruchs aufweist.

13. Auslaufschutz nach einem der Ansprüche 11 oder 12,
**dadurch gekennzeichnet,**
**dass** die Dichtscheibe zumindest einen vorgefertigten Schlitz (19, 20) als Durchbruch aufweist.

14. Auslaufschutz nach einem der Ansprüche 1 bis 13,
**dadurch gekennzeichnet,**
**dass** die Dichtelemente (03, 24) im Dichtungspaket (02) derart angeordnet sind, dass die Durchbrüche an zwei benachbarten Dichtelementen (03, 24) zumindest abschnittsweise zueinander versetzt sind.

15. Auslaufschutz nach einem der Ansprüche 11 bis 14,
**dadurch gekennzeichnet,**
**dass** sich an der Dichtscheibe mehrere Schlitze (19, 20) kreuzen.

16. Auslaufschutz nach einem der Ansprüche 13 bis 15,
**dadurch gekennzeichnet,**
**dass** die Schlitze (19, 20) den Außenrand der Dichtscheibe nicht durchbrechen.

17. Auslaufschutz nach einem der Ansprüche 1 bis 16,
**dadurch gekennzeichnet,**
**dass** am Außenrand der Dichtscheibe zumindest eine Nut (17, 18) vorgesehen ist, wobei ein am Trägerelement (01) vorgesehener Befestigungsvorsprung (09) in diese Nut (17, 18) derart geführt werden kann, so dass die Dichtscheibe durch Verdrehen der Nut (17, 18) relativ zum Befestigungsvorsprung formschlüssig am Trägerelement (01) festgelegt werden kann.

18. Auslaufschutz nach einem der Ansprüche 1 bis 17,
**dadurch gekennzeichnet,**
**dass** zwischen der Öffnung und dem Dichtelement (03, 24) eine zusätzliche Dichtungsmembran (23, 28) mit Sollbruchstelle vorgesehen ist, die das Dichtelement (23, 28) wasserdicht vom wasserführenden Innenbereich der Abwasserleitung (12) trennt.

19. Auslaufschutz nach Anspruch 18,
**dadurch gekennzeichnet,**
**dass** die zusätzliche Dichtmembran (23, 28) als Verschlussmittel dient.

20. Auslaufschutz nach einem der Ansprüche 1 bis 19,
**dadurch gekennzeichnet,**
**dass** das Reinigungswerkzeug (26) am Dichtelement (03, 24) vormontiert ist und den Durchbruch permanent durchgreift.

21. Auslaufschutz nach einem der Ansprüche 1 bis 20,
**dadurch gekennzeichnet,**
**dass** das vormontierte Reinigungswerkzeug (26) durch die zusätzliche Dichtmembran (23, 28) wassergeschützt ist.

22. Auslaufschutz nach einem der Ansprüche 1 bis 21,
**dadurch gekennzeichnet,**
**dass** das Reinigungswerkzeug (26) als Spitze einer rotatorisch antreibbaren Reinigungsspirale ausgebildet ist.

23. Auslaufschutz nach einem der Ansprüche 1 bis 21,
**dadurch gekennzeichnet,**
**dass** als Dichtelement ein oder mehrere Dichtringe vorgesehen sind, die abdichtend am Umfang der Reinigungsspirale zur Anlage kommen können.

24. Auslaufschutz nach einem der Ansprüche 1 bis 23,
**dadurch gekennzeichnet,**
**dass** die Abwasserleitung (12) in der Art eines Fallrohres ausgebildet ist.

25. Auslaufschutz nach einem der Ansprüche 1 bis 24,
**dadurch gekennzeichnet,**
**dass** die Abwasserleitung (12) in der Art eines Revisionsschachtes ausgebildet ist.

26. Auslaufschutz nach einem der Ansprüche 1 bis 25,
**dadurch gekennzeichnet**,
das am Verschlusselement und/oder am Trägerelement (01) eine Füllstandsanzeige vorgesehen ist, mit der der Wasserstand in der Abwasserleitung (12) angezeigt werden kann.

27. Auslaufschutz nach Anspruch 26,
**dadurch gekennzeichnet,**
**dass** die Füllstandsanzeige in der Art eines Schwimmers ausgebildet ist.

28. Dichtungselement oder Dichtungspaket zur Verwendung an einem Auslaufschutz nach einem der Ansprüche 1 bis 26.
